# EUROPÄISCHE PATENTSCHRIFT

(11) **EP 3 128 806 B1**
(45) Veröffentlichungstag und Bekanntmachung des Hinweises auf die Patenterteilung: **19.02.2020**
(21) Anmeldenummer: 16181346.4
(22) Anmeldetag: 26.07.2016
(51) Int. Cl.: H05B 3/42, H05B 3/08, H01R 4/20, B29C 45/27, H05B 3/46, B29K 105/00, B29C 45/20, B29C 45/74

(54) **HEIZELEMENT FÜR EINEN STRÖMUNGSKANAL ODER EIN FORMNEST UND SPRITZGIESSDÜSE MIT EINEM SOLCHEN HEIZELEMENT**
HEATING ELEMENT FOR A FLOW CHANNEL OR A MOULD CAVITY AND INJECTION MOLDING NOZZLE WITH SUCH A HEATING ELEMENT
ÉLEMENT DE CHAUFFAGE POUR UN CANAL D'ECOULEMENT OU UNE CAVITE DE FORMAGE ET BUSE DE MOULAGE PAR INJECTION COMPRENANT UN TEL ELEMENT DE CHAUFFAGE

(30) Priorität: 03.08.2015 DE 102015112748
(43) Veröffentlichungstag der Anmeldung: 08.02.2017
(73) Patentinhaber: GÜNTHER Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE); Drössler, Ralf, verstorben (DE); Kwiatkowski, Marco, 35099 Burgwald (DE)
(74) Vertreter: Patentanwälte Olbricht Buchhold Keulertz

(56) Entgegenhaltungen:
- DE-A1-102012 101 400
- US-A- 4 403 405
- US-A- 5 235 737
- US-A1- 2003 218 006
- US-A1- 2007 149 049

## Beschreibung

Die Erfindung betrifft ein Heizelement zum Beheizen eines Strömungskanals oder eines Formnests gemäß Anspruch 1 und eine Spritzgießdüse mit einem solchen Heizelement nach Anspruch 16.

Ein Strömungskanal, im Besonderen ein Heißkanal, dient in der Spritzgießtechnik der Zuführung einer fließfähigen Masse - beispielsweise einer Kunststoffschmelze - bei einer vorgebbaren Temperatur sowie unter hohem Druck in ein Formnest eines Formwerkzeugs (bspw. Formplatte). Ein spezieller Abschnitt eines Strömungskanals kann von einer Spritzgießdüse ausgebildet sein. Diese weisen meist ein Materialrohr mit einem Strömungskanal auf, der in einem Düsenmundstück endet. Letzteres bildet endseitig eine Düsenaustrittsöffnung, die über eine Angussöffnung in das Formnest mündet.

Damit sich die fließfähige Masse innerhalb des Heiß- bzw. Strömungskanals nicht vorzeitig abkühlt, werden elektrische Heizelemente mit Heizleitern eingesetzt. Deren elektrische Leiter sind über Kabel aus dem Spritzgießwerkzeug herauszuführen, welches den Strömungskanal und das Formwerkzeug umfasst. Dabei sind die Anschlüsse an den Heizelementen hohen Temperaturen und starken Erschütterungen und Vibrationen ausgesetzt. Dies betrifft insbesondere Heizelemente, die außen auf dem Materialrohr einer Spritzgießdüse angeordnet sind. In diesem Bereich besteht meist wenig freier Bauraum. In besonderer Ausgestaltung weisen die Heizelemente ein hülsenförmiges Trägerelement und einen elektrischen Leiter auf, der bei Anlegen einer elektrischen Spannung bzw. bei Durchfluss von elektrischem Strom Wärme erzeugt.

Die gleichen Probleme ergeben sich bei der Beheizung eines Formnests. Auch hier ist das ggf. auf einem Wandungsabschnitt aufgebrachte oder in der Formnestwandung eingebrachte Heizelement starken Erschütterungen und Vibrationen ausgesetzt, wodurch die Anschlüsse des Heizelements entsprechend belastet sind. Hinzu kommen meist beengte Platzverhältnisse, die es erschweren, einen dauerhaft zuverlässigen elektrischen Anschluss bereitzustellen.

Der elektrische Leiter kann - wie beispielsweise in DE 10 2006 049 669 A1 offenbart - eine aus Widerstandsdraht gebildete Heizwendel sein. US 4 486 650 A offenbart in Kombination mit einer Heizwendel zum Beispiel eine lösbare Steckverbindung zwischen den Anschlussenden der Heizwendel und der Anschlussleitung einer Stromversorgung.

Nachfolgend wird beispielhaft eine Dickschichtheizung auf einem zylindrischen Trägerelement zugrunde gelegt. Die Erfindung ist darauf jedoch nicht beschränkt, sondern in gleicher Weise auch bei anderen Arten und Formen von Heizelementen anwendbar.

DE 10 2006 049 667 A1 verwendet sogenannte Dickschicht-Heizelemente, die im Siebdruckverfahren als Heizleiterbahnen auf einer Hülse als Trägerelement aufgebracht sind. Zwischen dem Trägerelement und dem elektrischen Leiter ist optional eine Isolierschicht vorgesehen, die ebenfalls im Siebdruckverfahren als Dickschicht aufgebracht wird. Um die Baugröße des Heizelements besonders gering zu halten, kann das Trägerelement - wie in DE 199 41 038 A1 beschrieben - auch unmittelbar das Materialrohr einer Spritzgießdüse sein.

Um die Dickschichtheizung mit Energie zu versorgen, ist an den Enden der Heizleiterbahn jeweils ein Anschlusskontakt vorgesehen, z. B. in Form einer Anschlusslitze oder eines Anschlussstifts (siehe dazu WO 2005/053361 A2, DE 10 2008 004 526 A1 oder DE 10 2008 015 376 A1). Über den Anschlusskontakt wird die Heizleiterbahn mit der Anschlussleitung einer Stromquelle verbunden.

Außerdem ist aus DE 10 2012 101 400 A1 eine Spritzgießdüse mit elektrischem Heizelement bekannt, das eine Anschlusseinrichtung zum Erzeugen einer elektrischen Verbindung zu einer Anschlussleitung umfasst, wobei Anschlusskontakte des Heizelements in einem Isolierkörper der Anschlusseinrichtung enden, der die Anschlusskontakte elektrisch voneinander trennt. Die Anschlussleitung weist Kontaktelemente auf, die mit den Anschlusskontakten des Heizelements elektrisch kontaktierbar sind, wobei der Isolierkörper zumindest abschnittsweise in einer Aufnahmehülse der Anschlusseinrichtung angeordnet ist. Dabei verfügt die Anschlussleitung endseitig über einen Stecker oder eine Kupplung der/die derart lösbar in oder an der Aufnahmehülse festlegbar ist, dass die Kontaktelemente der Anschlussleitung die Anschlusskontakte des Heizelements elektrisch kontaktieren. Ein in Richtung des Heizelements weisendes erstes Ende der Aufnahmehülse umgreift hierbei den Isolierkörper. An diesem ersten Ende weist die Aufnahmehülse zudem zwei gegenüberliegend nach außen weisende und am Heizelement befestigte Füße auf.

Nachteilhaft an dieser Ausgestaltung ist, dass der gesamte Anschluss eine hohe Bauhöhe aufweist, die von dem Heizelement absteht. Hierfür wird im Spritzgießwerkzeug Bauraum benötigt. In diesem Bauraum ist die Anordnung von Strömungskanälen und weiteren Spritzgießdüsen damit ausgeschlossen. Ebenso ist die Gestaltung des Formnests eingeschränkt. Problematisch ist ferner, dass der relativ hohe Aufbau einen relativ langen Hebelarm bildet, der bei Zug am Kabel auf die Anschlusseinrichtung wirkt und diese zerstören kann.

Ferner, ist aus US 5 235 737 A ein Heizelement nach dem Oberbegriff des Anspruchs 1 bekannt.

Aufgabe der Erfindung ist es daher, ein Heizelement für einen Strömungskanal oder ein Formnest sowie eine Spritzgießdüse mit einem solchen Heizelement bereitzustellen, wobei das Heizelement eine kompakte Anschlussvorrichtung aufweist. Dabei soll die Anaschlussvorrichtung einen stets ausreichenden und zuverlässigen elektrischen Kontakt zwischen den Anschlusskontakten der Heizleiterbahnen und der mit der Stromquelle verbundenen Anschlussleitung herstellen. Sie muss aufgrund der beim Spritzgießen vorherrschenden hohen Temperaturen temperaturbeständig sein und mechanischen Zugbelastungen standhalten, die beim Ein- und Ausbau der Spritzgießdüse und/oder beim Auswechseln des Heizelements sowie durch Vibrationen und Erschütterungen auftreten können.

Hauptmerkmale der Erfindung sind im kennzeichnenden Teil von Anspruch 1 und in Anspruch 16 angegeben. Ausgestaltungen sind Gegenstand der Ansprüche 2 bis 15.

Die Erfindung betrifft ein Heizelement zum Beheizen eines Strömungskanals oder eines Formnests, insbesondere eines Heißkanals, das ein Trägerelement aufweist, welches einen Heizleiter mit einem ersten Anschlussstift und einem zweiten Anschlussstift trägt, und das eine Anschlusseinrichtung mit einem elektrischen Anschlusskabel mit einem ersten und zweiten Leiter umfasst, wobei der erste und zweite Anschlussstift in einem Isolierkörper der Anschlusseinrichtung enden, der den ersten Anschlussstift elektrisch vom zweiten Anschlussstift trennt, wobei der Isolierkörper zumindest abschnittsweise in einer Aufnahmehülse der Anschlusseinrichtung angeordnet ist, und wobei die Aufnahmehülse mit einem ersten Ende in Richtung des Trägerelements weist, mit dem ersten Ende an dem Trägerelement fixiert ist und den Isolierkörper relativ zum Trägerelement festlegt, wobei auf dem ersten Anschlussstift eine erste Crimphülse und auf dem zweiten Anschlussstift eine zweite Crimphülse jeweils durch plastische Verformung festgelegt ist, und auf dem ersten Leiter die erste Crimphülse und auf dem zweiten Leiter die zweite Crimphülse jeweils durch plastische Verformung festgelegt ist.

Der Vorteil einer solchen Ausgestaltung besteht darin, dass gegenüber einer Steckverbindung, deren Bauhöhe sich minimal auf circa 33 mm reduzieren lässt, eine Reduktion der Bauhöhe bzw. des Überstands über das Trägerelement auf 19 mm oder sogar weniger gelingt. Die Verbindung zwischen der Aufnahmehülse und dem Trägerelement führt zu einer stabilen Verbindung und die elektrischen Leiter und Anschlussstifte sind innerhalb des Isolierkörpers gut vor äußeren Belastungen geschützt. Es wird ein stets ausreichenden und zuverlässigen elektrischer Kontakt zwischen den Anschlusskontakten der Heizleiterbahnen und der mit der Stromquelle verbundenen Anschlussleitung hergestellt. Diese wiedersteht auch hohen Temperaturen sowie Vibrationen und Erschütterungen.

Gemäß einer optionalen Ausgestaltung ist vorgesehen, dass die Aufnahmehülse ein dem ersten Ende gegenüberliegendes zweites Ende aufweist, das eine dritte Crimphülse ausbildet und durch plastische Verformung auf dem Anschlusskabel festgelegt ist. Damit wird eine Zugsicherung ausgebildet, die das Anschlusskabel festlegt. Damit wird das Risiko reduziert, dass die Crimpverbindungen oder die Anschlussstifte durch Zugkräfte belastet werden. Insbesondere wird hierdurch über die Aufnahmehülse eine Zugverbindung des Kabelmantels zum Trägerelement ausgebildet.

In einer bevorzugten Ausführungsform ist das Trägerelement rohr- oder manschettenförmig ausgebildet. Damit eignet es sich insbesondere zur Beheizung eines durchströmenden Fluids. Dieses kann entweder unmittelbar durch das Trägerelement strömen oder das Trägerelement wird auf ein Rohr aufgesetzt bzw. aufgeschoben. Insbesondere kann ein so ausgestaltetes Trägerelement auf ein Materialrohr einer Spritzgießdüse zur Herstellung von Kunststoffteilen aufgesetzt werden.

Eine erhöhte Festigkeit der Verbindung wird erreicht, wenn der Isolierkörper mit einer formangepassten Auflagefläche auf dem Trägerelement aufsteht. Bei einer rohr- oder manschettenförmig Ausgestaltung des Trägerelements ist insbesondere eine konkave Aufstandsfläche, insbesondere teilzylindrische Aufstandsfläche ideal.

In einer näheren Ausgestaltung er Erfindung umgreift das erste Ende der Aufnahmehülse den Isolierkörper und weist an diesem ersten Ende zwei gegenüberliegend nach außen weisende und am Trägerelement befestigte Füße auf.

Die Füße ermöglichen eine stabile Verbindung zum Trägerelement und stützen einen ansonsten schlanken Anschluss gut gegen Kippmomente ab. Die Füße sind erfindungsgemäß stoffschlüssig am Trägerelement befestigt, insbesondere sollten die Füße und das Trägerelement jeweils aus Metall bestehen und miteinander verschweißt sein.

Des Weiteren sollten die Füße einteilig, insbesondere monolithisch an und zur Aufnahmehülse ausgebildet sein. Hierdurch wird eine hohe Festigkeit zwischen den Füßen und der Aufnahmehülse erreicht.

Gemäß einer speziellen Variante der Erfindung sind die Füße jeweils mit einem Schenkelabschnitt an der Aufnahmehülse festgelegt und mit jeweils einem auf dem Trägerelement aufliegenden Auflageabschnitt an diesem befestigt.

Eine besonders vorteilhafte Ausführung sieht vor, dass die Füße so an die Außenkontur des Isolierkörpers angepasst sind, dass sie der Außenkontur folgen, insbesondere jeweils mit dem Schenkelabschnitt. Damit halten sie den Isolierkörper gut fest und die Anschlusseinrichtung ist sehr kompakt.

Die Anschlusseinrichtung eignet sich vor allem für Varianten, bei denen der Heizleiter in Schichttechnologie auf das Trägerelement aufgebracht ist. Bei diesen sind die Kontaktstellen am Übergang zu den Kontaktstiften besonders empfindlich gegenüber Zug- und Druckbelastungen. Diese können erfindungsgemäß weitestgehend unterbunden werden. Als Heizleiter erweist sich erfindungsgemäß eine elektrisch leitende Dickschicht sehr gut. Bevorzugt ist eine solche elektrisch leitende Dickschicht auf einer in Schichttechnologie, erfindungsgemäß in Dickschichttechnik, auf das Trägerelement aufgebrachte erste Isolierschicht angeordnet. Damit kann das Trägerelement aus elektrisch leitendem Material, insbesondere aus einem Metall, bestehen. Es bietet sich an die elektrisch leitende Dickschicht mit einer in Schichttechnologie, erfindungsgemäß in Dickschichttechnik, aufgebrachten zweiten Isolierschicht abzudecken. Damit sind die elektrischen Leiter gekapselt und geschützt. Zur direkten Befestigung der Füße am Trägerelement sollten die erste Isolierschicht und die zweite Isolierschicht eine Aussparung im Bereich der Füße aufweisen.

Weiterhin sieht eine Variante der Erfindung vor, dass die Aufnahmehülse aus Metall besteht. Metall ist wärmeresistent und kann Zugkräfte gut aufnehmen. Außerdem lässt es sich gut plastisch verformen und damit crimpen. Auch das Trägerelement besteht vorzugsweise aus Metall.

Gemäß einer speziellen Form weist der Isolierkörper einen Halsabschnitt und einen Sockelabschnitt auf, wobei sich die Aufnahmehülse auf dem Sockelabschnitt des Isolierkörpers abstützt. Damit ist die Anschlusseinrichtung erst im Bereich des Trägerelements breiter und stützt sich stabil ab. Weiter weg vom Trägerelement ist sie hingegen schlank. Des Weiteren entsteht ein stabiler Formschluss zwischen der Aufnahmehülse und dem Isolierkörper.

Zur Erhöhung der Sicherheit wird gemäß einer Ergänzung vorgesehen, dass ein Erdungsleiter des Anschlusskabels elektrisch leitend mit der Aufnahmehülse verbunden ist. Bei Kontakt von der elektrischen Zu- oder Ableitung oder der Heizleiterbahn mit der Aufnahmehülse wird der Strom dann über das Erdungskabel abgeleitet.

Zur Vermeidung von elektrischem Kontakt bietet es sich eine Ausgestaltung an, bei welcher der Isolierkörper zwei Durchgangslöcher aufweist, wobei in jedem Durchgangsloch eine der ersten und zweiten Crimphülsen angeordnet ist.

Eine besonders gute Zugentlastung der Anschlussstift ist mit einer speziellen Auslegung erreichbar, nach der die Durchgangslöcher jeweils aus einem ersten, einem zweiten und einem dritten Abschnitt ausgebildet sind, die wenigstens zwei unterschiedliche Durchmesser aufweisen. Im Besonderen sollte der erste Abschnitt auf der Seite des Trägerelements angeordnet sein und einen größeren Durchmesser aufweisen als der zweite Abschnitt, der zwischen dem ersten und dritten Abschnitt liegt, wobei der dritte Abschnitt einen größeren Durchmesser aufweist als der zweite Abschnitt, wobei die plastischen Verformungen der Crimphülsen im Bereich der Anschlussstifte innerhalb des ersten Abschnitts liegen, ein mittlerer Bereich der Crimphülsen ohne plastische Verformung im Bereich des zweiten Abschnitts angeordnet ist, und die plastischen Verformungen der Crimphülsen im Bereich der Leiter innerhalb des dritten Abschnitts liegen. Auf diese Weise lässt sich ein Formschluss zwischen dem Isolierkörper und den Crimphülsen ausbilden. Hierzu sollte der Durchmesser des zweiten Abschnitts kleiner sein als der Durchmesser der Crimphülsen im Bereich der plastischen Verformungen. Es ist hierbei günstig, wenn der Durchmesser des zweiten Abschnitts im Wesentlichen dem Durchmesser der Crimphülsen im nicht plastisch verformten Bereich entspricht. Geeignet für gängige Heizleistungen in der Spritzgießtechnik sind beispielsweise Durchmesser von 1,6 ± 0,10 mm für den ersten und dritten Abschnitt und von 1,15 +0,10/-0,05 mm für den zweiten Abschnitt. Hier kann beispielhaft eine Crimphülse mit 1,00 mm Durchmesser verwendet werden.

Ferner sollten die erste und zweite Crimphülse jeweils eine zylinderförmige Außenmantelfläche haben. Mit solchen Crimphülsen werden ein minimaler Durchmesser und damit eine kompakte Anschlusseinrichtung bereitgestellt. Bevorzugt haben die erste und zweite Crimphülse zumindest auf der Seite der Leiter jeweils eine Innenfase. Dies erleichtert das Einfädeln der Leiter.

Aus Montagegründen sieht eine spezielle Ausgestaltung der Erfindung vor, dass der Isolierkörper zweiteilig aus einem Aufstandselement, das auf dem Trägerelement aufsteht, und einem Kopfelement, das auf der dem Trägerelement gegenüberliegenden Seite benachbart zum Aufstandselement positioniert ist, ausgebildet ist. Damit wird ein beiderseitiger Formschluss mit den Crimphülsen ermöglicht. Hierzu sollten der erste Abschnitt und der zweite Abschnitt im Aufstandselement ausgebildet sein. Der dritte Abschnitt sollte im Kopfelement ausgebildet sein. Damit kann nach dem Vercrimpen der Crimphülsen auf den Anschlussstiften das Aufstandselement über die Crimphülsen geschoben werden. Es bietet sich an, wenn die Anschlussstifte im Wesentlichen oder exakt bündig mit dem Aufstandselement abschließen. Das noch freie Ende der Crimphülsen schaut bei der Montage dann noch aus dem Aufstandselement heraus und kann mit den elektrischen Leitern vercrimpt werden. Anschließend wird das Kopfelement von den Leitern auf die Crimphülsen und zum Aufstandselement geschoben werden.

Um die elektrischen Leiter voneinander zu trennen, sollte der Isolierkörper mit den Crimphülsen abschließen oder diese überragen, insbesondere quer zur Längsrichtung.

Gemäß einer speziellen Ausgestaltung des Heizelements besteht die Aufnahmehülse aus einem ersten und zweiten Hülsenabschnitt, die miteinander verschweißt sind, wobei der erste Hülsenabschnitt das erste Ende der Aufnahmehülse ausbildet. Mit anderen Worten legt der erste Hülsenabschnitt den Isolierkörper, zumindest dessen Aufstandselement, am Trägerelement fest. Damit können vor allem die Anschlussstifte gut geschützt werden, bevor die elektrischen Leiter mit den Crimphülsen verbunden werden und durch Herunterhängen unkontrolliert Zug- und Hebelkräfte auf die Anschlussstifte ausüben. Vorzugsweise sind die beiden Hülsenabschnitte durch Laserschweißen verbunden. Insbesondere kann der zweite Hülsenabschnitt zunächst auf die Leiter bzw. das Anschlusskabel aufgeschoben werden, bis die erste und zweite Crimphülse verformt sind. Anschließend kann der zweite Hülsenabschnitt zum ersten Hülsenabschnitt geschoben und mit diesem verbunden werden.

Besonders bevorzugt wird der zweite Hülsenabschnitt in den ersten Hülsenabschnitt eingeschoben. Optional ist eine umlaufende Schweißnut zwischen dem ersten und zweiten Hülsenabschnitt ausbildbar, in die anschließend die Schweißnaht gelegt wird. Eine solche Nut hat vorzugsweise einen dreieckigen Querschnitt. Es wird eine komfortable Montage und Verschweißung ermöglicht, die zudem optisch wertig aussieht.

Bei Zweiteiligkeit der Aufnahmehülse eröffnet sich die Möglichkeit, einen Erdungsleiter des Anschlusskabels zwischen den beiden Hülsenabschnitt herauszuführen und auf der Außenseite einer der Hülsenabschnitte elektrisch leitend festzulegen, insbesondere anzulasern. Dies ist besonders einfach und kostengünstig.

Optional sind in dem Isolierkörper ein oder zwei weitere Anschlusskontakte mit Kontaktstiften angeordnet, die mit einem Thermofühler elektrisch verbunden sind. Es eignen sich sowohl drahtförmige Thermofühler, jedoch vor allem auch in Dickschichttechnologie hergestellte Thermofühler. Für drahtförmige Thermofühler kann die Aufnahmehülse optional ein Befestigungsmittel aufweisen. Dieses sitzt dann vorzugsweise auf der Außenseite der Aufnahmehülse.

Die Erfindung betrifft außerdem eine Spritzgießdüse mit einem Strömungskanal, insbesondere einem Heißkanal, in einem Materialrohr, und mit einem vorstehend beschriebenen Heizelement, das zum Beheizen des Strömungskanals thermisch mit dem Materialrohr gekoppelt ist. Eine solche Spritzgießdüse verfügt mithin über einen stabilen elektrischen Anschluss und ist besonders kompakt. Sie eignet sich hierdurch für besonders kleine Abstände zwischen Anspritzpunkten, die in einer Formplatte angeordnet sind und in welche die das Materialrohr ausmündet.

Die Spritzgießdüse kann ein das Heizelement einfassendes Gehäuse aufweisen. Dieses schützt das Heizelement. Vorzugsweise ist in dem Gehäuse eine seitliche Aussparung eingebracht, die in Längsrichtung des Strömungskanals hin offen ausgebildet ist, wobei die Aufnahmehülse durch die seitliche Aussparung hindurchragt. Dies dient einer einfachen (De-)Montage.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht eines Heizelements;
- Fig. 2: einen Schnitt durch eine Anschlusseinrichtung eines Heizelementes;
- Fig. 3: einen Längsschnitt durch einen Isolierkörper; und
- Fig. 4: eine perspektivische Explosionsdarstellung einer Spritzgießdüse mit einem Heizelement.

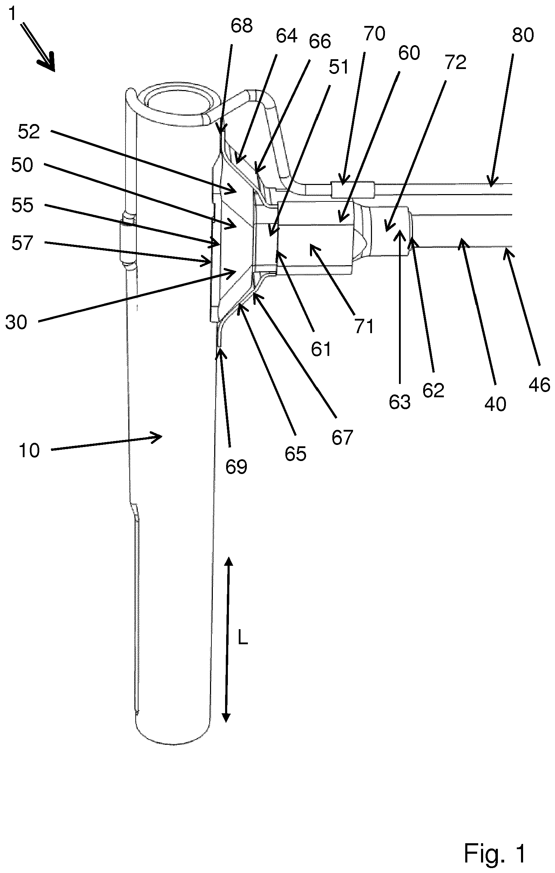

Fig. 1 zeigt eine perspektivische Ansicht eines Heizelements 1 zum Beheizen eines Strömungskanals in einer Heißkanaldüse, die beispielsweise Bestandteil eines Heißkanalwerkzeugs ist. Das Heizelement 1 weist ein rohrförmiges Trägerelement 10 auf, welches einen Heizleiter 20 mit einem ersten Anschlussstift 21 und einem zweiten Anschlussstift 22 trägt. Außerdem verfügt es über eine Anschlusseinrichtung 30 mit einem elektrischen Anschlusskabel 40 mit einem ersten und zweiten Leiter 41, 42, wobei der erste und zweite Anschlussstift 21, 22 in einem Isolierkörper 50 der Anschlusseinrichtung 30 enden.

Der Isolierkörper 50 ist abschnittsweise in einer Aufnahmehülse 60 der Anschlusseinrichtung 30 angeordnet. Er weist dabei einen Halsabschnitt 51 und einen Sockelabschnitt 52 auf, wobei sich die Aufnahmehülse 60 auf dem Sockelabschnitt 52 des Isolierkörpers 50 abstützt.

Die Aufnahmehülse 60 weist mit einem ersten Ende 61 in Richtung des Trägerelements 10, ist mit diesem ersten Ende 61 an dem Trägerelement 10 fixiert und legt den Isolierkörper 50 relativ zum Trägerelement 10 fest. Hierzu umgreift das erste Ende 61 der Aufnahmehülse 60 den Isolierkörper 50. Außerdem hat die Aufnahmehülse 60 an diesem ersten Ende 61 zwei gegenüberliegend nach außen weisende und am Trägerelement 10 befestigte Füße 64, 65. Die zwei Füße 64, 65 weisen entgegengesetzt in Längsrichtung L des rohrförmigen Trägerelements 10 und sind stoffschlüssig am Trägerelement 10 befestigt, insbesondere angeschweißt bzw. lasergeschweißt. Hierfür bestehen die Aufnahmehülse 60 und das Trägerelement 10 jeweils aus einem Metall.

Man erkennt, dass die Füße 64, 65 einteilig monolithisch mit der Aufnahmehülse 60 ausgebildet sind. Die Füße 64, 65 unterteilen sich jeweils in einen Schenkelabschnitt 66, 67, der an der Aufnahmehülse 60 festgelegt ist, und einen auf dem Trägerelement 10 aufliegenden Auflageabschnitt 68, 69, der am Trägerelement 10 befestigt ist. Außerdem sieht man, wie die Füße 64, 65, insbesondere deren Schenkelabschnitte 66, 67 so an die Außenkontur des Isolierkörpers 50 angepasst sind, dass sie der Außenkontur folgen.

Ein dem ersten Ende 61 gegenüberliegendes zweites Ende 62 ist als dritte Crimphülse 63 ausbildet und durch plastische Verformung auf dem Anschlusskabel 40, insbesondere dessen Schutzmantel 46 festgelegt. Die Aufnahmehülse 60 erstreckt sich mit dem zweite Enden 62 also über den Isolierkörper 50 hinaus.

Aus Montagegründen ist die Aufnahmehülse 60 aus einem ersten und einem zweiten Hülsenabschnitt 71, 72 ausgebildet, die miteinander verschweißt sind, wobei der erste Hülsenabschnitt 71 das erste Ende 61 der Aufnahmehülse 60 ausbildet und der zweite Hülsenabschnitt 72 die dritte Crimphülse 63.

Zu erkennen ist ferner ein Befestigungsmittel 70 auf der Außenseite der Aufnahmehülse 60, an dem ein Thermofühler 80 festgelegt ist. Insbesondere ist das Befestigungsmittel 70 eine Durchstecköffnung, durch welche der Thermofühler hindurchgefädelt ist.

Anhand der eng am Trägerelement 10 anliegenden Anlagefläche 57 des Isolierkörpers 50 erkennt man, dass diese formangepasst an die Rohrform des Trägerelements 10 ist.

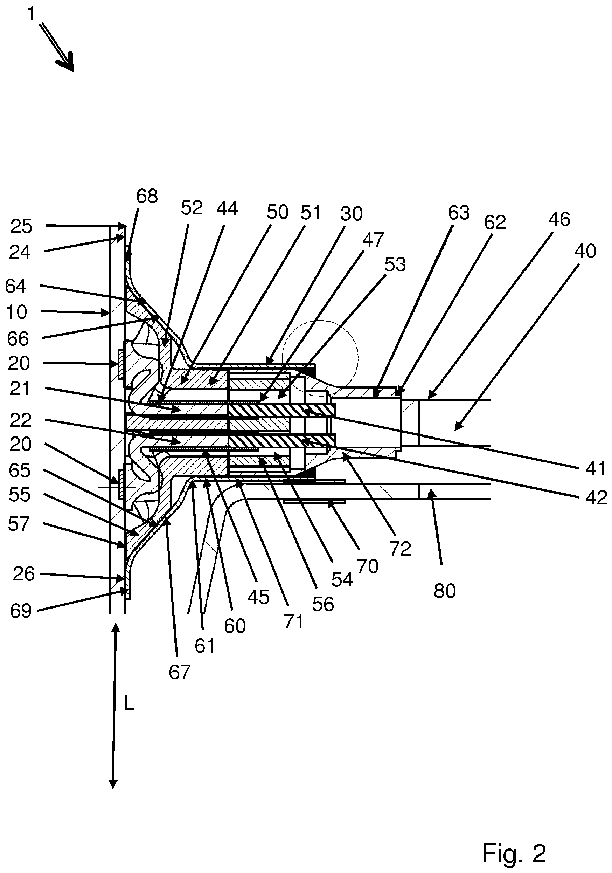

Fig. 2 zeigt einen Schnitt durch eine Anschlusseinrichtung 30 eines Heizelementes 1. Die Beschreibung zu Fig. 1 trifft auch auf die Darstellung nach Fig. 2 zu. Im Weiteren werden daher nur noch die zusätzlich erkennbaren Merkmale beschrieben.

So sieht man im Schnitt nach Fig. 2 einen Heizleiter 20, der von einer elektrisch leitenden Dickschicht ausgebildet ist. Dieser liegt auf einer in Dickschichttechnik, auf das Trägerelement 10 aufgebrachten ersten Isolierschicht 24 und ist mit einer in Dickschichttechnik aufgebrachten zweiten Isolierschicht 25 abgedeckt. Die erste Isolierschicht 24 und die zweite Isolierschicht 25 weisen jedoch eine Aussparung 26 im Bereich der Füße 64, 65 auf.

Der Heizleiter 20 weist einen ersten Anschlussstift 21 und einen zweiten Anschlussstift 22 auf. Diese verfügen jeweils über eine Entlastungsschleife bzw. -bogen und stehen perpendikular vom Trägerelement 10 ab. Der erste und zweite Anschlussstift 21, 22 enden in dem Isolierkörper 50, welcher den ersten Anschlussstift 21 elektrisch vom zweiten Anschlussstift 22 trennt. Auf dem ersten Anschlussstift 21 ist eine erste Crimphülse 44 und auf dem zweiten Anschlussstift 22 eine zweite Crimphülse 45 jeweils durch plastische Verformung festgelegt. Weiterhin hat das elektrische Anschlusskabel 40 einen ersten und einen zweiten Leiter 41, 42. Auf dem ersten Leiter 41 ist die erste Crimphülse 44 und auf dem zweiten Leiter 42 die zweite Crimphülse 45 jeweils durch plastische Verformung festgelegt. Der Isolierkörper 50 hat zwei Durchgangslöcher 53, 54, wobei in jedem Durchgangsloch 53, 54 eine der ersten und zweiten Crimphülsen 44,45 angeordnet ist. Die erste und zweite Crimphülse 44, 45 haben jeweils eine zylinderförmige Außen- und Innenmantelfläche, zumindest bevor sie verformt werden. Außerdem verfügen die erste und zweite Crimphülse 44, 45 zumindest auf der Seite der Leiter 41, 42 über eine Innenfase 47.

Ferner ist zu sehen, dass der Isolierkörper 50 zweiteilig aus einem Aufstandselement 55, das auf dem Trägerelement 10 aufsteht, und einem Kopfelement 56, das auf der dem Trägerelement 10 gegenüberliegenden Seite benachbart zum Aufstandselement 55 positioniert ist, ausgebildet ist. Die Anschlussstifte 21, 22 schließen bündig mit dem Aufstandselement 55 ab.

Auf diese Weise kann das Kopfelement 56 bei der Montage zunächst auf die elektrischen Leiter 41, 42 aufgeschoben werden, während das Aufstandselement 55 bereits mit dem ersten Hülsenabschnitt 71 am Trägerelement 10 festgelegt ist. Sobald die Leiter 41, 42 mit der ersten und zweiten Crimphülse 44, 45 verbunden sind, wird das Kopfelement 56 dann zum Aufstandselement 55 geschoben. Der Isolierkörper 50 überragt dann insbesondere mit dem Kopfelement 56 die erste und zweite Crimphülse 44, 45.

Der zweite Hülsenabschnitt 72 kann ebenfalls zunächst auf die Leiter 41, 42 bzw. das Anschlusskabel 40 aufgeschoben werden, bis die erste und zweite Crimphülse 44, 45 verformt sind. Anschließend kann der zweite Hülsenabschnitt 72 dann zum ersten Hülsenabschnitt 71 geschoben und mit diesem verbunden werden. Er fixiert dann auch das Kopfelement 56 des Isolierkörpers 50.

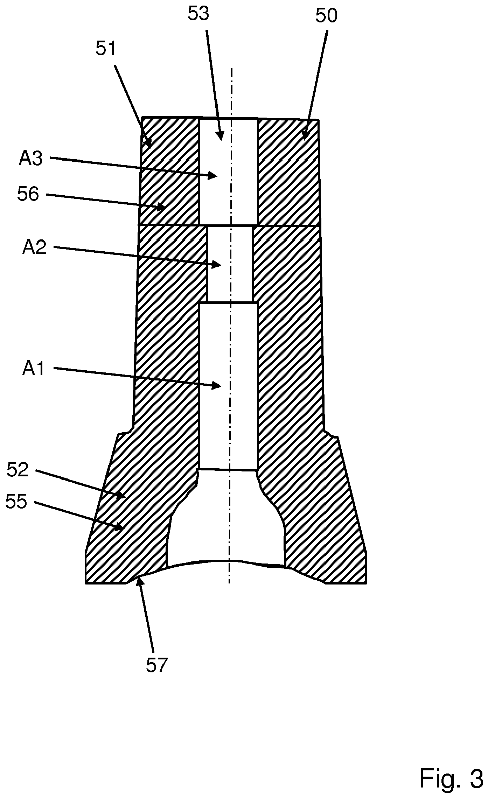

In Fig. 3 sieht man einen Längsschnitt durch einen Isolierkörper 50. In dem Längsschnitt liegt ein Durchgangsloch 53, das sich aus einem ersten, einem zweiten und einem dritten Abschnitt A1, A2, A3 zusammensetzt. Die Abschnitte A1, A2, A3 weisen zwei unterschiedliche Durchmesser auf. Der erste Abschnitt A1, welcher später auf der Seite des Trägerelements 10 angeordnet ist, insbesondere mit einer Auflagefläche 57, hat einen größeren Durchmesser als der zweite Abschnitt A2. Der zweite Abschnitt A2 ist zwischen dem ersten und dem dritten Abschnitt A1, A3 angeordnet. Dabei verfügt der dritte Abschnitt A3 über einen größeren Durchmesser als der zweite Abschnitt A2. Insbesondere haben der erste und der dritte Abschnitt A1, A3 einen gleich großen Durchmesser.

Auf diese Weise ist es möglich, dass die plastischen Verformungen von Crimphülsen auf Seiten der Anschlussstifte innerhalb des ersten Abschnitts A1 liegen, ein mittlerer Bereich der Crimphülsen ohne plastische Verformung im Bereich des zweiten Abschnitts A2 angeordnet ist, und die plastischen Verformungen der Crimphülsen im Bereich der Leiter innerhalb des dritten Abschnitts A3 liegen. Eine stabile Verbindung entsteht, wenn der Durchmesser des zweiten Abschnitts A2 kleiner ist als der Durchmesser der Crimphülsen im Bereich der plastischen Verformungen. Hierzu sollte der Durchmesser des zweiten Abschnitts A2 im Wesentlichen dem Durchmesser der Crimphülsen im nicht plastisch verformten Bereich entsprechen.

Damit das ganze montierbar ist, setzt sich der Isolierkörper 50 zusammen aus einem Aufstandselement 55, das einen Sockelabschnitt 52 mit der Auflagefläche 57 ausbildet, und einem Kopfelement 56, welches einen Halsabschnitt 51 ausbildet. Das Aufstandselement 55 trägt den ersten und zweiten Abschnitt A1, A2. Es kann aufgeschoben werden, wenn die Crimphülsen mit den Anschlusstiften verbunden sind. Anschließend sind die Crimphülsen außerhalb des Aufstandselements 55 mit Anschlussleiten verbindbar, bevor das Kopfelement über die Verformung der Crimphülse geschoben wird.

Geeignet für gängige Heizleistungen in der Spritzgießtechnik sind beispielsweise Durchmesser von 1,6 ± 0,10 mm für den ersten und dritten Abschnitt und von 1,15 +0,10/-0,05 mm. Hier kann beispielhaft eine Crimphülse mit 1,00 mm Durchmesser verwendet werden.

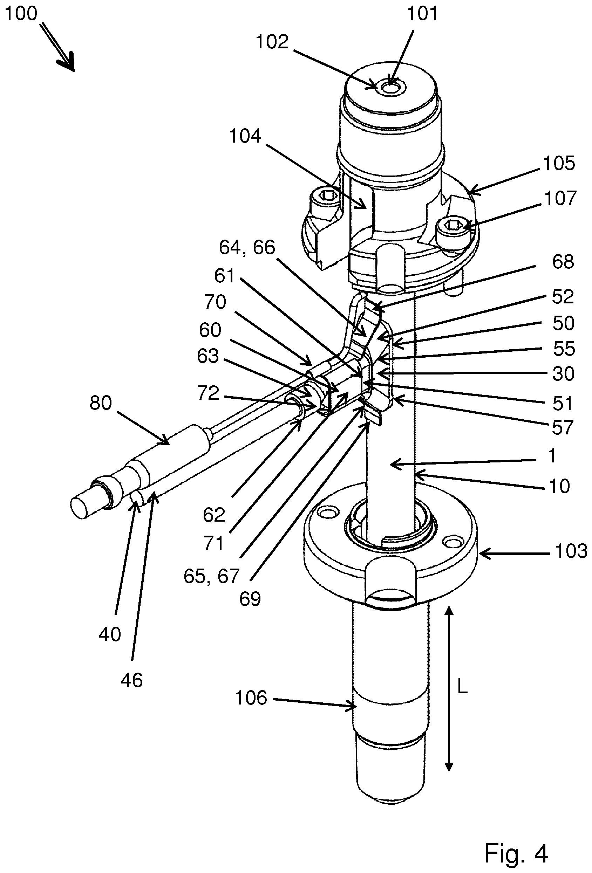

Fig. 4 zeigt eine perspektivische Explosionsdarstellung einer Spritzgießdüse 100 mit einem Heizelement 1. Insbesondere ist das Heizelement 100 technisch entsprechend zu der Darstellung in Fig. 1 aufgebaut. Daher wird hinsichtlich der Beschreibung des Heizelements auf vorstehende Beschreibung verwiesen.

Das hülsenförmige Heizelement 1 ist auf ein Materialrohr 102 der Spritzgießdüse aufgeschoben, welches sich in Richtung der Längsachse L erstreckt. Hierdurch ist das Heizelement 1 zur Beheizung des Strömungskanals 101 thermisch mit dem Materialrohr 102 gekoppelt. Vorzugsweise ist bei Raumtemperatur eine Spielpassung zwischen dem Materialrohr 102 und dem hülsenförmigen Heizelement 1 ausgebildet. Bei Betriebstemperatur des Heizelements und des Materialrohres 102 sollte eine Presspassung ausgebildet sein. Hierdurch wird eine gute thermische Kopplung bei gleichzeitig einfacher Montage erreicht. Hierzu sollte der Wärmeausdehnungskoeffizient des Materialrohres 102 größer sein als der Wärmeausdehnungskoeffizient des Heizelements 1, insbesondere von dessen hülsenförmigen Trägerelement.

Weiterhin erkennt man, dass ein Gehäuse 103 bestehend aus einem Gehäusekopf 105 und einem Gehäuseschaft 106 vorgesehen ist. In dem Gehäusekopf 105 ist eine Aussparung 104 in Form eines seitlichen Längsschlitzes eingebracht, welcher in Richtung der Anschlusseinrichtung 30 offen ausgebildet ist.

In der gezeigten Explosionsdarstellung ist das Materialrohr 102 mit dem Heizelement 1 aus dem Gehäuseschaft 106 herausgezogen. Außerdem ist das Heizelement 1 nicht vollständig auf das Materialrohr 102 geschoben.

Korrekt montiert ist die Spritzgießdüse 100, wenn das Heizelement 1 in Längsrichtung L in Richtung des Gehäusekopfs 105 geschoben wird, sodass die quer zur Längsrichtung abstehende Anschlusseinrichtung 30 innerhalb der seitlichen Aussparung 104 im Gehäusekopf 105 angeordnet ist. Außerdem ist der Gehäuseschaft 106 in Längsrichtung L in Richtung des Gehäusekopfs 105 zu schieben, bis beide mit gegenüberliegenden Flanschrändern aneinanderstoßen. Mit Schrauben 107 werden der Gehäuseschaft 106 und der Gehäusekopf 105 anschließend aneinander fixiert. Das Materialrohr 102 und das Heizelement 1 liegen dann im Wesentlichen innerhalb des Gehäuses 103.

Eine solche Spritzgießdüse kann entweder an eine zentrale Maschinendüse oder eine Verteilerplatte angeschlossen werden, insbesondere mit dem Gehäusekopf 105. Mit dem anderen Ende ragen der Gehäuseschaft 106 und das Materialrohr 102 dann in eine Angussöffnung einer Formplatte, in welcher ein Hohlraum zur Ausbildung eines Bauteils ausgebildet ist (auch Formnest genannt).

Die Erfindung ist nicht auf eine der vorbeschriebenen Ausführungsformen beschränkt, sondern in vielfältiger Weise abwandelbar.

So ist es insbesondere möglich, einen Erdungsleiter des Anschlusskabels 40 elektrisch leitend mit der Aufnahmehülse 60 zu verbinden. Insbesondere kann der Erdungsleiter des Anschlusskabels 40 zwischen den beiden Hülsenabschnitt 71, 72 herausgeführt und auf der Außenseite einer der Hülsenabschnitte 71, 72) elektrisch leitend festgelegt sein, insbesondere angelasert sein.

Denkbar ist auch der (nicht weiter dargestellte) Einsatz des Heizelements 1 in einem (gleichfalls nicht gezeigten) Formnest eines Spritzgießwerkzeugs, um beispielsweise einen Abschnitt der Formnestwandung zu beheizen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein, insofern sie beansprucht sind.

**Bezugszeichenliste**

| | | | |
|---|---|---|---|
| 1 | Heizelement | 60 | Aufnahmehülse |
| 10 | Trägerelement | 61 | erstes Ende (Aufnahmehülse) |
| | | 62 | zweites Ende (Aufnahmehülse) |
| 20 | Heizleiter | 63 | dritte Crimphülse |
| 21 | erster Anschlussstift | 64 | erster Fuß |
| 22 | zweiter Anschlussstift | 65 | zweiter Fuß |
| 23 | elektrisch leitende Dickschicht | 66 | Schenkelabschnitt (erster Fuß) |
| 24 | erste Isolierschicht | 67 | Schenkelabschnitt (zweiter Fuß) |
| 25 | zweite Isolierschicht | 68 | Auflageabschnitt (erster Fuß) |
| 26 | Aussparung | 69 | Auflageabschnitt (zweiter Fuß) |
| | | 70 | Befestigungsmittel |
| 30 | Anschlusseinrichtung | 71 | erster Hülsenabschnitt |
| | | 72 | zweiter Hülsenabschnitt |
| 40 | Anschlusskabel | | |
| 41 | erster Leiter | 80 | Thermofühler |
| 42 | zweiter Leiter | | |
| 44 | erste Crimphülse | 100 | Spritzgießdüse |
| 45 | zweite Crimphülse | 101 | Strömungskanal |
| 46 | Schutzmantel | 102 | Materialrohr |
| 47 | Innenfase | 103 104 | Gehäuse Aussparung |
| 50 | Isolierkörper | 105 | Gehäusekopf |
| 51 | Halsabschnitt | 106 | Gehäuseschaft |
| 52 | Sockelabschnitt | | |
| 53 | erstes Durchgangsloch | A1 | erster Abschnitt |
| 54 | zweites Durchgangsloch | A2 | zweiter Abschnitt |
| 55 | Aufstandselement | A3 | dritter Abschnitt |
| 56 | Kopfelement | L | Längsrichtung (Trägerelement) |
| 57 | Auflagefläche | | |

## Patentansprüche

1. Heizelement (1) zum Beheizen eines Strömungskanals oder eines Formnests, das ein Trägerelement (10) aufweist, welches einen Heizleiter (20) mit einem ersten Anschlussstift (21) und einem zweiten Anschlussstift (22) trägt, und das eine Anschlusseinrichtung (30) mit einem elektrischen Anschlusskabel (40) mit einem ersten und zweiten Leiter (41, 42) umfasst,
a) wobei der erste und zweite Anschlussstift (21, 22) in einem Isolierkörper (50) der Anschlusseinrichtung (30) enden, der den ersten Anschlussstift (21) elektrisch vom zweiten Anschlussstift (22) trennt,
b) wobei der Isolierkörper (50) zumindest abschnittsweise in einer Aufnahmehülse (60) der Anschlusseinrichtung (30) angeordnet ist,
c) wobei die Aufnahmehülse (60) mit einem ersten Ende (61) in Richtung des Trägerelements (10) weist, mit dem ersten Ende (61) an dem Trägerelement (10) fixiert ist und den Isolierkörper (50) relativ zum Trägerelement (10) festlegt,
d) und wobei auf dem ersten Anschlussstift (21) eine erste Crimphülse (44) und auf dem zweiten Anschlussstift (22) eine zweite Crimphülse (45) jeweils durch plastische Verformung festgelegt ist, und auf dem ersten Leiter (41) die erste Crimphülse (44) und auf dem zweiten Leiter (42) die zweite Crimphülse (45) jeweils durch plastische Verformung festgelegt ist,
**dadurch gekennzeichnet,**
e) **dass** das erste Ende (61) der Aufnahmehülse (60) den Isolierkörper (50) umgreift sowie an diesem ersten Ende (61) zwei gegenüberliegend nach außen weisende und am Trägerelement (10) befestigte Füße (64, 65) aufweist,
▪ wobei die Füße (64, 65) stoffschlüssig am Trägerelement (10) befestigt sind,
f) **dass** der Heizleiter (20) in Schichttechnologie auf das Trägerelement (10) aufgebracht ist,
▪ wobei der Heizleiter (20) eine elektrisch leitende Dickschicht aufweist, die auf einer in Dickschichttechnik auf das Trägerelement (10) aufgebrachten ersten Isolierschicht (24) angeordnet ist, und die von einer in Dickschichttechnik aufgebrachten zweiten Isolierschicht (25) abgedeckt ist, und
▪ wobei zur direkten Befestigung der Füße (64, 65) der Aufnahmehülse (60) die erste und die zweite Isolierschicht (24, 25) eine Aussparung im Bereich der Füße (64, 65) aufweisen, und
g) **dass** die Aufnahmehülse (60) ein dem ersten Ende (61) gegenüberliegendes zweites Ende (62) aufweist, das eine dritte Crimphülse (63) ausbildet und durch plastische Verformung auf dem Anschlusskabel (40) festgelegt ist.

2. Heizelement (1) nach Anspruch 1, **dadurch gekennzeichnet, dass** das Trägerelement (10) rohr- oder manschettenförmig ist.

3. Heizelement (1) nach einem der vorhergehenden Ansprüche, **dadurch gekennzeichnet, dass** die Füße (64, 65) so an die Außenkontur des Isolierkörpers (50) angepasst sind, dass sie der Außenkontur folgen.

4. Heizelement (1) nach einem der vorhergehenden Ansprüche, **dadurch gekennzeichnet, dass** die Aufnahmehülse (60) aus Metall besteht.

5. Heizelement (1) nach einem der vorhergehenden Ansprüche, **dadurch gekennzeichnet, dass** der Isolierkörper (50) einen Halsabschnitt (51) und einen Sockelabschnitt (52) aufweist, wobei sich die Aufnahmehülse (60) auf dem Sockelabschnitt (52) des Isolierkörpers (50) abstützt.

6. Heizelement (1) nach einem der vorhergehenden Ansprüche, **dadurch gekennzeichnet, dass** ein Erdungsleiter des Anschlusskabels (40) elektrisch leitend mit der Aufnahmehülse (60) verbunden ist.

7. Heizelement (1) nach einem der vorhergehenden Ansprüche, **dadurch gekennzeichnet, dass** der Isolierkörper (50) zwei Durchgangslöcher (53, 54) aufweist, wobei in jedem Durchgangsloch (53, 54) eine der ersten und zweiten Crimphülsen (44, 45) angeordnet ist.

8. Heizelement (1) nach Anspruch 7, **dadurch gekennzeichnet, dass** die Durchgangslöcher (53, 54) jeweils aus einem ersten, einem zweiten und einem dritten Abschnitt (A1, A2, A3) ausgebildet sind, die wenigstens zwei unterschiedliche Durchmesser aufweisen.

9. Heizelement (1) nach Anspruch 8, **dadurch gekennzeichnet, dass** der erste Abschnitt (A1) auf der Seite des Trägerelements (10) angeordnet ist und einen größeren Durchmesser aufweist als der zweite Abschnitt (A2), der zwischen dem ersten und dritten Abschnitt (A1, A3) liegt, und dass der dritte Abschnitt (A3) einen größeren Durchmesser aufweist als der zweite Abschnitt (A2), wobei die plastischen Verformungen der Crimphülsen (44, 45) im Bereich der Anschlussstifte (21, 22) innerhalb des ersten Abschnitts (A1) liegen, ein mittlerer Bereich der Crimphülsen (44, 45) ohne plastische Verformung im Bereich des zweiten Abschnitts (A2) angeordnet ist, und die plastischen Verformungen der Crimphülsen (44, 45) im Bereich der Leiter (41, 42) innerhalb des dritten Abschnitts (A3) liegen.

10. Heizelement (1) nach einem der vorhergehenden Ansprüche, **dadurch gekennzeichnet, dass** der Isolierkörper (50) zweiteilig aus einem Aufstandselement (55), das auf dem Trägerelement (10) aufsteht, und einem Kopfelement (56), das auf der dem Trägerelement (10) gegenüberliegenden Seite benachbart zum Aufstandselement (55) positioniert ist, ausgebildet ist.

11. Heizelement (1) nach einem der vorhergehenden Ansprüche, **dadurch gekennzeichnet, dass** der Isolierkörper (50) mit den Crimphülsen (44, 45) abschließt oder diese überragt.

12. Heizelement (1) nach einem der vorhergehenden Ansprüche, **dadurch gekennzeichnet, dass** die Aufnahmehülse (60) aus einem ersten und einem zweiten Hülsenabschnitt (71, 72) besteht, die miteinander verschweißt sind, wobei der erste Hülsenabschnitt (71, 72) das erste Ende (61) der Aufnahmehülse (60) ausbildet.

13. **Spritzgießdüse (100)** mit einem Strömungskanal (101) in einem Materialrohr (102), und mit einem Heizelement (1) nach einem der vorhergehenden Ansprüche, das zum Beheizen des Strömungskanals (101) thermisch mit dem Materialrohr (102) gekoppelt ist.

## Claims

1. Heating element (1) for heating a flow channel or a mould cavity which has a support element (10), which supports a heat conductor (20) with a first connection pin (21) and a second connection pin (22), and which comprises a connection apparatus (30) with an electric connection cable (40) with a first and a second conductor (41, 42),
a) wherein the first and second connection pins (21, 22) end in an insulating body (50) of the connection apparatus (30) which separates the first connection pin (21) electrically from the second connection pin (22),
b) wherein the insulating body (50) is arranged at least in certain sections in a receiving sleeve (60) of the connection apparatus (30),
c) wherein the receiving sleeve (60) points with a first end (61) in the direction of the support element (10), is fixed with the first end (61) on the support element (10) and fixes the insulating body (50) relative to the support element (10),
d) and wherein a first crimping sleeve (44) is fixed onto the first connection pin (21) and a second crimping sleeve (45) is fixed onto the second connection pin (22), in each case by plastic deformation, and the first crimping sleeve (44) is fixed onto the first conductor (41) and the second crimping sleeve (45) is fixed onto the second conductor (42), in each case by plastic deformation,
**characterised in that**
e) the first end (61) of the receiving sleeve (60) grips around the insulating body (50) and has at this first end (61) two feet (64, 65) pointing outwards opposite from one another and fastened to the support element (10),
▪ wherein the feet (64, 65) are fixed with a substance-to-substance bond to the support element (10),
f) the heat conductor (20) is applied onto the support element (10) by laminating technology,
▪ wherein the heat conductor (20) has an electroconductive thick layer which is arranged on a first insulating layer (24) applied onto the support element (10) by thick film technology and is covered by a second insulating layer (25) applied by thick film technology, and
▪ wherein for the direct attachment of the feet (64, 65) of the receiving sleeve (60) the first and the second insulating layer (24, 25) have a recess in the region of the feet (64, 65), and
g) the receiving sleeve (60) has a second end (62), which is opposite the first end (61) and forms a third crimping sleeve (63) and is fixed onto the connection cable (40) by plastic deformation.

2. Heating element (1) according to claim 1, **characterised in that** the support element (10) is in the form of a tube or sleeve.

3. Heating element (1) according to any of the preceding claims, **characterised in that** the feet (64, 65) are adapted to the outer contour of the insulating body (50) such that they follow the outer contour.

4. Heating element (1) according to any of the preceding claims, **characterised in that** the receiving sleeve (60) is made of metal.

5. Heating element (1) according to any of the preceding claims, **characterised in that** the insulating body (50) has a neck portion (51) and a base portion (52), wherein the receiving sleeve (60) is supported on the base portion (52) of the insulating body (50).

6. Heating element (1) according to any of the preceding claims, **characterised in that** an earthing conductor of the connection cable (40) is connected in an electrically conducting manner to the receiving sleeve (60).

7. Heating element (1) according to any of the preceding claims, **characterised in that** the insulating body (50) has two through-holes (53, 54), wherein one of the first and second crimping sleeves (44, 45) is arranged in each through-hole (53, 54).

8. Heating element (1) according to claim 7, **characterised in that** the through-holes (53, 54) are formed respectively by a first portion, a second portion and a third portion (A1, A2, A3), which have at least two different diameters.

9. Heating element (1) according to claim 8, **characterised in that** the first portion (A1) is arranged on the side of the support element (10) and has a larger diameter than the second portion (A2), which lies between the first and third portions (A1, A3), and **in that** the third portion (A3) has a larger diameter than the second portion (A2), wherein the plastic deformations of the crimping sleeves (44, 45) in the region of the connection pins (21, 22) are within the first portion (A1), a middle region of the crimping sleeves (44, 45) without plastic deformation is arranged in the region of the second portion (A2), and the plastic deformations of the crimping sleeves (44, 45) are in the region of the conductors (41, 42) inside the third portion (A3).

10. Heating element (1) according to any of the preceding claims, **characterised in that** the insulating body (50) is formed in two parts by a standing element (55), which stands on the support element (10), and a head element (56) which is positioned adjacent to the standing element (55) on the side opposite the support element (10).

11. Heating element (1) according to any of the preceding claims, **characterised in that** the insulating body (50) terminates with the crimping sleeves (44, 45) or protrudes beyond them.

12. Heating element (1) according to any of the preceding claims, **characterised in that** the receiving sleeve (60) consists of a first sleeve portion and a second sleeve portion (71, 72), which are welded to one another, wherein the first sleeve portion (71, 72) forms the first end (61) of the receiving sleeve (60).

13. **Injection-moulding nozzle (100)** with a flow channel (101) in a material tube (102), and a heating element (1) according to any of the preceding claims, which is thermally coupled to the material tube (102) for heating the flow channel (101).

## Revendications

1. Élément de chauffage (1) pour le chauffage d'un canal d'écoulement ou d'une cavité de formage, qui présente un élément porteur (10) qui porte un conducteur chauffant (20) avec une première broche de raccordement (21) et une deuxième broche de raccordement (22), et qui comprend un dispositif de raccordement (30) avec un câble de raccordement (40) à un premier et un deuxième conducteurs (41, 42),
a) la première et la deuxième broches de raccordement (21, 22) aboutissant dans un corps isolant (50) du dispositif de raccordement (30), qui sépare électriquement la première broche de raccordement (21) de la deuxième broche de raccordement (22),
b) le corps isolant (50) étant disposé au moins partiellement dans un manchon de logement (60) du dispositif de raccordement (30),
c) le manchon de logement (60) étant dirigé avec une première extrémité (61) en direction de l'élément porteur (10), étant fixé par la première extrémité (61) à l'élément porteur (10) et fixant le corps isolant (50) par rapport à l'élément porteur (10),
d) et une première douille de sertissage (44) étant fixée sur la première broche de raccordement (21) et une deuxième douille de sertissage (45) étant fixée sur la deuxième broche de raccordement (22), chacune par déformation plastique, et la première douille de sertissage (44) étant fixée sur le premier conducteur (41) et la deuxième douille de sertissage (45) étant fixée sur le deuxième conducteur (42), chacune par déformation plastique,
**caractérisé en ce que**
e) la première extrémité (61) du manchon de logement (60) entoure le corps isolant (50) et cette première extrémité (61) présente deux pieds (64, 65) dirigés vers l'extérieur en opposition l'un à l'autre et fixés à l'élément porteur (10),
▪ les pieds (64, 65) étant fixés de façon composite à l'élément porteur (10),
f) le conducteur chauffant (20) est appliqué sur l'élément porteur (10) par procédé de stratification,
▪ le conducteur chauffant (20) présentant une couche épaisse conductrice de l'électricité, qui est appliquée sur une première couche isolante (24) appliquée sur l'élément porteur (10) par technique des couches épaisses, et qui est recouverte d'une deuxième couche isolante (25) appliquée par technique des couches épaisses, et
▪ la première et la deuxième couches isolantes (24, 25) présentant un dégagement dans la zone des pieds (64, 65) pour la fixation directe des pieds (64, 65) du manchon de logement (60), et
g) le manchon de logement (60) présente, opposée à la première extrémité (61), une deuxième extrémité (62) qui forme une troisième douille de sertissage (63) et qui est fixée au câble de raccordement (40) par déformation plastique.

2. Élément de chauffage (1) selon la revendication 1, **caractérisé en ce que** l'élément porteur (10) est en forme de tube ou de manchette.

3. Élément de chauffage (1) selon l'une quelconque des revendications précédentes, **caractérisé en ce que** les pieds (64, 65) sont adaptés au contour extérieur du corps isolant (50) de telle façon qu'ils suivent le contour extérieur.

4. Élément de chauffage (1) selon l'une quelconque des revendications précédentes, **caractérisé en ce que** le manchon de logement (60) est composé de métal.

5. Élément de chauffage (1) selon l'une quelconque des revendications précédentes, **caractérisé en ce que** le corps isolant (50) présente une partie de col (51) et une partie de socle (52), le manchon de logement (60) s'appuyant sur la partie de socle (52) du corps isolant (50).

6. Élément de chauffage (1) selon l'une quelconque des revendications précédentes, **caractérisé en ce que** le conducteur de terre du câble de raccordement (40) est relié de façon conductrice de l'électricité au manchon de logement (60).

7. Élément de chauffage (1) selon l'une quelconque des revendications précédentes, **caractérisé en ce que** le corps isolant (50) présente deux orifices de passage (53, 54), chacune de la première et la deuxième douilles de sertissage (44, 45) étant disposée dans un orifice de passage (53, 54).

8. Élément de chauffage (1) selon la revendication 7, **caractérisé en ce que** les orifices de passage (53, 54) sont chacun formés d'une première, d'une deuxième et d'une troisième partie (A1, A2, A3) qui présentent au moins deux diamètres différents.

9. Élément de chauffage (1) selon la revendication 8, **caractérisé en ce que** la première partie (A1) est disposée du côté de l'élément porteur (10) et présente un diamètre supérieur à celui de la deuxième partie (A2), qui se trouve entre la première et la troisième partie (A1, A3), et la troisième partie (A3) présente un diamètre supérieur à celui de la deuxième partie (A2), les déformations plastiques des douilles de sertissage (44, 45) dans la zone des broches de raccordement (21, 22) se trouvent dans la première partie (A1), une zone médiane des douilles de sertissage (44, 45) sans déformation plastique étant disposée dans la zone de la deuxième partie (A2) et les déformations plastiques des douilles de sertissage (44, 45) dans la zone des conducteurs (41, 42) se trouvant dans la troisième partie (A3).

10. Élément de chauffage (1) selon l'une quelconque des revendications précédentes, **caractérisé en ce que** le corps isolant (50) est formé en deux parties d'un élément support (55) qui se dresse sur l'élément porteur (10) et d'un élément de tête (56) qui est positionné du côté opposé à l'élément porteur (10), à côté de l'élément support (55).

11. Élément de chauffage (1) selon l'une quelconque des revendications précédentes, **caractérisé en ce que** le corps isolant (50) est de niveau avec les douilles de sertissage (44, 45) ou les dépasse.

12. Élément de chauffage (1) selon l'une quelconque des revendications précédentes, **caractérisé en ce que** le manchon de logement (60) se compose d'une première et d'une deuxième parties de logement (71, 72) qui sont soudées l'une à l'autre, la première partie de logement (71, 72) formant la première extrémité (61) du manchon de logement (60).

13. **Buse de moulage par injection (100)** avec un canal d'écoulement (101) dans un tube de matière (102) et avec un élément de chauffage (1) selon l'une quelconque des revendications précédentes, qui est couplé de façon thermique au tube de matière (102) pour le chauffage du canal d'écoulement (101).
